# EUROPEAN PATENT SPECIFICATION

(11) **EP 3 289 651 B1**
(45) Date of publication and mention of the grant of the patent: **20.03.2019**
(21) Application number: 15724790.9
(22) Date of filing: 27.04.2015
(51) Int. Cl.: H02J 9/06, H04W 52/02, H04W 88/08, H02M 1/42, H04W 24/02, H04W 36/16

(54) **METHODS AND COMPUTER PROGRAM FOR INCREASING RELIABILITY AND RESILIENCY IN A RADIO BASE STATION**
VERFAHREN UND COMPUTERPROGRAMM ZUR ERHÖHUNG DER ZUVERLÄSSIGKEIT UND NACHGIEBIGKEIT IN EINER FUNKBASISSTATION
PROCÉDÉS ET PROGRAMME INFORMATIQUE POUR L'AUGMENTATION DE LA FIABILITÉ ET DE LA RÉSISTANCE DANS UNE STATION DE BASE RADIO

(43) Date of publication of application: 07.03.2018
(73) Proprietor: Telefonaktiebolaget LM Ericsson (publ), 164 83 Stockholm (SE)
(72) Inventor: ELEFTHERIADIS, Lackis, 818 32 Gävle (SE); EKLUND, Per, 181 48 Lidingö (SE)
(74) Representative: Ericsson
(86) International application number: PCT/SE2015/050470
(87) International publication number: WO 2016/175685

(56) References cited:
- WO-A1-2015/008467
- CN-A- 101 651 484
- US-A1- 2006 246 328
- US-A1- 2007 293 223
- US-A1- 2012 252 525
- US-A1- 2013 307 339
- US-A1- 2014 256 330
- US-A1- 2015 008 746

## Description

### TECHNICAL FIELD

The present technology relates to methods, computer program, and a radio base station in a wireless telecommunications network. In more detail, the present technology refers to power feeding for increasing of the mean time between failure, reliability and resiliency of a Radio Base Station.

### BACKGROUND

The operation of Radio base stations (RBSs) needs electricity. The sites of the RBSs are widely spread both in cities and in the country side. The RBS sites comprising macro and/or small cells are fed from the electric power grid. The standards of power grids as well as the quality of the electricity they distribute are very different - good power grids providing very stable electric current free from noise to very bad power grids distributing unstable, unreliable and noisy electricity.

US 2006/0246328 A1 discloses a modular power system using a fuel cell as a back-up power supply. The modular power system comprises lithium-metal-polymer batteries to bridge any gaps between an AC source and the fuel cell, and also for backup power if necessary. The system is modular and intended to allow aggregation to meet additional power demands. In the wording of the claims, said document does not disclose:

Selecting, based on the comparing, the external power feed mode or the internal power feed mode, wherein the power feed circuitry is disconnected from the external power feed, wherein the plurality of disturbance threshold criteria include: detection of an increase in the voltage from the external power feed above a first predetermined threshold; and detection of a decrease in the voltage from the external power feed below a second predetermined threshold.

That is to say said document does not disclose the selection based on the monitoring of the quality of the power supplied by the mains power source.

Unstable, unreliable and noisy power grids are characterized by disturbances like disruption of power delivery, drop in voltage level, strong voltage and current pulses, and high voltage and current pulses short in time, e.g. transients, bursts. The fluctuation of the electric power has different causes, e.g. the grid is not dimensioned for the loading, thunderstorms, unstable power plants, etc.

The RBSs comprise electronic circuitry which reliability and life-time is strongly depending on the quality of the power delivery.

Unstable, unreliable and noisy electricity causes damages to the electronic circuitry of different functional blocks of a RBS. Power feed circuitry, such as Power Supply Units (PSUs), are the interface between the power grid and such functional blocks of the RBSs. The PSUs are therefore especially put out for the impact of power disturbances.

The existing solution does not take into account that the AC grid disturbances that appears on the grid have impact on the RBS resiliency and the MTBF of the PSU and thereby the RBS system.

### SUMMARY

One object is to provide a technique for increasing reliability and resilience of power feed circuitry in a radio base station.

Aspects of embodiments of the disclosure provide methods radio base stations and computer programs comprising computer program code which, when run in a processor circuitry of radio base station controller of a radio base station, causes the radio base station controller to perform the steps of the method, all as described in the claims. The claims define the scope of the invention.

One advantage with the described technique is that the power circuitry of a radio base station is disconnected from the external power feed during periods of damaging disturbance levels in the external power feed wherein the radio base station is powered by an internal power feed enabling measurement of the disturbance level at the input of the external power feed and return to the external power feed of the radio base station during periods of low disturbance levels, whereby the mean time between failure of the power circuitry and the radio base station is increased.

### BRIEF DESCRIPTION OF THE DRAWINGS

The foregoing, and other, objects, features and advantages of the present invention will be more readily understood upon reading the following detailed description in conjunction with the drawings in which:
Figure 1 is a block diagram of an exemplary network in which technique described herein may be implemented;
Figure 2 is a block diagram illustrating an example of an architecture of a Radio Base Station;
Figure 3 is a block diagram illustrating power supply unit according to prior art;
Figure 4 is a flowchart illustrating a method for increasing reliability and resilience of power feed circuitry;
Figure 5 is a flowchart illustrating an embodiment of the method;
Figure 6 is a block diagram illustrating a radio base station and a power feed circuitry for implementing said method and embodiments thereof.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present technique may be practiced in other embodiments that depart from these specific details. In other instances, detailed descriptions of well-known methods, devices, and circuits are omitted so as not to obscure the description of the present technique with unnecessary detail.

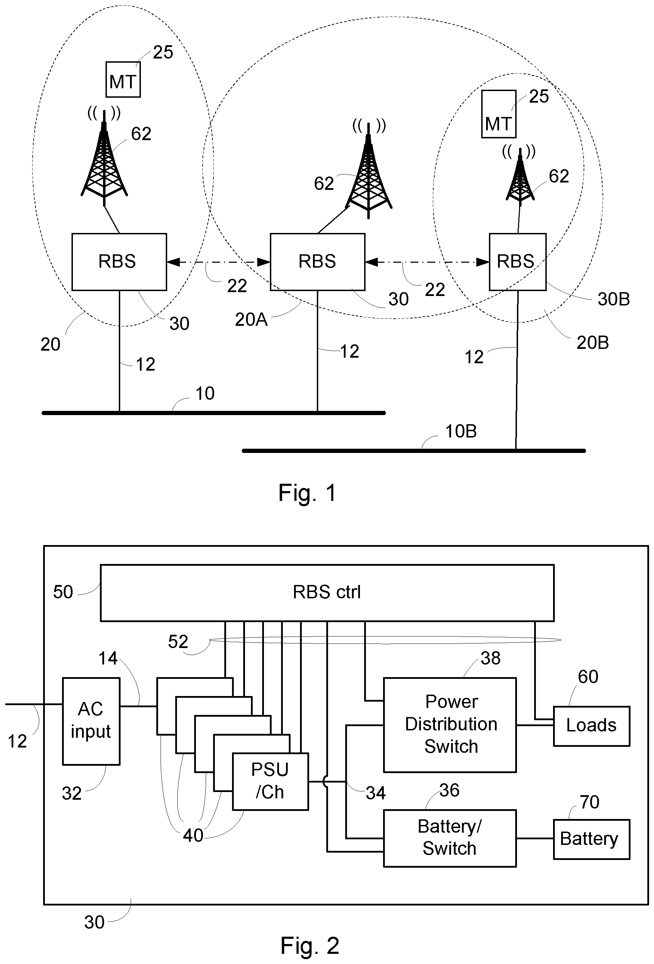

Figure 1 is a block diagram schematically illustrating a wireless telecommunications system power fed by an external power grid.

The wireless telecommunications system comprises a network comprising Radio Base Station, RBS, sites 20. Herein a site is controlled by a physical RBS serving macro and/or small cells (herein areas limited by dashed lines). A cell is an area in which an RBS is capable of supporting wireless radio communication, i.e. radio traffic, with a Mobile Terminal, MT. An RBS node comprises an RBS 30 that comprises at least one antenna and transceiver unit 62 providing wireless access for MTs 25 to the node within the site 20B by means of any standardized Radio Access Technology, RAT, e.g. GSM (Global System for Mobile telecommunication), 3G (Third Generation), 4G (Forth Generation), LTE (Long Term Evolution), enhanced LTE, LTE advanced, etc.

In figure 1, three RBS sites 20, 20A, 20B are illustrated. RBS sites indicated 20 and 20A are macro cell structures. RBS site indicated 20B is managing and controlling a small, or micro, cell structure only. RBS sites 20, 20A are therefore denoted RBS macro cell sites, and RBS site 20B is denoted RBS micro cell site. The micro/small cell site 20B comprises an RBS 30B. A micro or small cell may cover a smaller part of a macro cell in a RBS macro cell site. The RBSs 30, 30B are capable of signalling and exchanging information messages via standardized protocols, e.g. at handover procedures. If an MT 25 moves from one cell or site to another cell or site, the RBSs of said cells exchange information to initiate and finalize such a handover procedure. The communication paths 22 between the RBSs are indicated by dash-dot arrows for indicating bi-directional communication.

Each RBS site 20, 20A, 20B is electrically powered from an external power feed, e.g. an AC (Alternating Current) power grid. As illustrated, each RBS 30 is connected to an external power feed 10.

In the example in figure 1, RBS 30 in site 20 is connected to the external power feed 10 via a power input connection 12 which may be an electric power cable either in the air or in the ground. Other RBSs in nearby sites 20A, 20B are connected in the same way via an electric power cable 12 to the same power feed or another power feed 10B operated by another power supplier than the first RBS site 20. However, power feeds indicated as 10 and 10B may be the same power grid. The power grids may have different electric power features, e.g. one power grid provides less stable and noisier electric power.

The AC grid transmission lines are located around the country. The RBS nodes are located in different areas/cities, and are powered via substations via the power transmission lines.

The AC grid in many countries is not stable; it has several disturbances on the power transmission lines. The various disturbances affect the RBS nodes, at the power input of the RBS. The disturbances have direct impact on power feed circuitry of the PSU, which is directly fed from the AC grid.

The duration of the disturbances can vary from micro- or milliseconds to minutes. The impact on the RBS is that the PSU is not blocking any kind of disturbances and the PSU is affected by means of shutting down itself, and turning on all the time, depending of the kind of disturbance and level of the disturbance, i.e. time x voltage level. The components inside the PSU are affected by means of the decreasing the MTBF and this has impact on the reliability of the RBS node.

Figure 2 is a block diagram illustrating an example of an architecture of a Radio Base Station.

The operation and functions of an RBS 30 is handled and controlled by a RBS controller 50, which comprises at least one processor circuitry of digital processors and supporting memory storages for storing computer software and processing data. Said computer software when executed by the digital processors implements different functions of a RBS, such as handover of mobile terminals between different RBS sites, communication with the mobile stations and a backbone of the RBS enabling communication with different nodes in the Internet, control of different functional blocks or units in the RBS, etc. Some functions may be implemented as hardware. For said purposes, the RBS comprises a number of digital busses 52 connected to the functions blocks and units. In the example of figure 2, said function blocks and units consume electric power and could therefore be considered as loads 60. Examples of said loads are transceivers, power amplifier circuits and antennas (62 in figure 1). The power feeding of said function blocks or units are provided by one or a plurality of power feed circuits or power supply units, PSU, also sometimes denoted as chargers 40. Thus, a PSU 40 may be designated for one or more function blocks and units. The PSUs 40 are connected to the external power feed, most probably an AC grid, via a power cable connection 12 via an AC input interface 32, which distribute different phases provided by the AC grid through connections to the input terminals 14 of the PSUs. The PSUs converts the AC power into DC which is distributed to the loads 60 via wiring 34 to power distribution switches 38 enabling to switch off and on the power to different loads 60, i.e. functional blocks and units. Any disturbance in the external power feeding on connection 12 will propagate through the AC input interface 32 to the input terminals 14 of the PSUs 40.

For securing power feeding to the RBS in case of external power failure, the RBS is provided with an internal power feed 70, e.g. an arrangement of batteries capacity adapted to provide enough power capacity to the RBS during a pre-set time of external power feed failure. A switch 36 is provided for connecting and disrupting the power feeding from the internal power 70.

As illustrated in figure 2, the control buses 52 are connected between the RBS controller 50 and the functional blocks and units 40, 36, 38, 60 enabling control by the RBS controller and two way communications with said functional blocks and units.

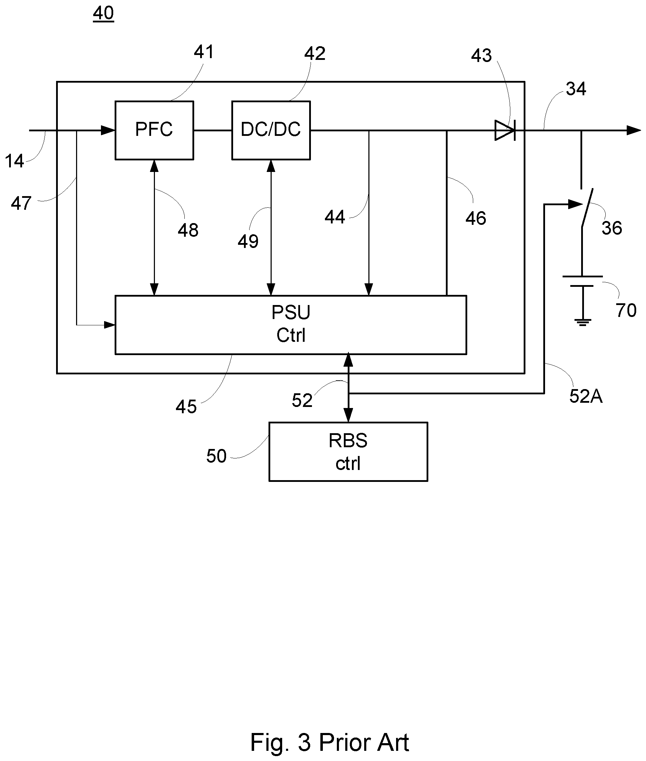

Figure 3 is a block diagram illustrating power supply unit according to prior art.

The power supply unit 40 comprises a number of electronic components for converting and adjust the power supply to a load needing electric power for its operation and functionality. The PSU is fed from an external power feed, e.g. an AC (Alternating Current) power grid, to which it is connected via the input terminal 14 (See figure 2). On the output 34 of the PSU is a converted and adjusted Direct Current (DC) provided, which power and voltage is adjusted and controlled by means of a PSU controller 45.

According to prior art, the input terminal 14 is connected to a Power Factor Correction unit (PFC) 41 for converting the provided AC into DC and correct the power factor of the received AC. The result is a corrected DC current which is connected to a DC/DC converter 42 for adjusting the DC to the correct voltage level of the load that the PSU is designated to feed. Between the output 34 of the PSU and the DC/DC converter 42 is a diode bridge 43 inserted for prohibiting current to leak through the PSU if the PSU is shut down or the external power feed does not provide any electric power to the PSU. If the PSU has been shut down or the external power feed does not provide any electric power to the PSU, an internal power feed 70 is adapted to be switched on via a switch 36 for securing the operation and function of the RBS.

The PSU 40 comprises a PSU controller 45 which is fed by the DC/DC converter and it is connected between the output of the DC/DC converter 42 and the diode bridge 43 via a feeding connection 46. Thus, the PSU controller 45 has no internal power feed and it will be shut down at the loss of external power feeding. In such a situation, the function of the RBS controller is however secured by the internal power feed 70, which is adapted to set the switch 36 in position "on", i.e. the switch is closed, enabling power feeding from the internal power feed, or source, 70, to the rest of the functional blocks of the RBS site 20. When the switch is in position "off", the switch is open prohibiting DC to pass.

The PSU controller 45 is adapted to measure the DC on the output 34 by means of a feedback loop 44 connected to the output of the DC/DC converter 42 and to measure the AC at the input terminal 14 by means of a feed forward loop 47 connected to the input terminal 14 of the PSU 40. Said feed forward loop 47 and feedback loop 44 is connected to the PSU controller 45, which comprise measure software and/or hardware for processing the received input from said loops. The PSU controller 45 may comprise comparison circuitry and pulse modulation means for providing measure values of the input AC and DC output. Said processing by the software/hardware results in control signals for controlling the PFC unit 41 and the DC/DC converter for adjusting the output current on the PSU out 34. The PFC unit 41 and the DC/DC converter 42 are connected to the PSU controller 45 via control busses 48 and 49, respectively.

The PSU controller 45 may be connected for communication and control purposes via a data bus 52 to a main controller 50 of the RBS. The RBS controller 50 is a processor for controlling the function and operation of the RBS. As an RBS may comprise a plurality of PSUs (see figure 2), the main controller 50 is provided with software to supervise and control the operation and function of all said PSUs 40 of the RBS. The PSU controller 45 may send the measured values via buss 52 to the RBS controller 50, which comprises computer program software for analysing the received measure values of AC in and DC out, and to set the internal power feed switch 36 via control bus 52A in position "closed/on" or "open/off" if total failure of power feeding occurs.

The problem with the described known power supply unit architecture and the existing RBS system is that different kinds of disturbances can damage the components inside the PSU and decrease the mean time between failure, MTBF. The PSU controller and the RBS controller is not adapted to handle disturbances on the power feeding input 14 like, e.g. drop or raise in voltage level, strong voltage and current pulses, and high voltage and current pulses short in time, e.g. transients, bursts. This problem has a great impact and effect on the RBS system by means of MTBF and resiliency.

In the following of the description, a technical solution to the problem is presented.

By sensing and continuously measuring the power quality, or rather the disturbances on the external power feed (AC grid) at the PSU input, the RBS controller can actively change to an internal power feed mode, and turn off the PSU via a controlled circuit breaker or relay inside the PSU when the disturbances appears. The RBS and the PSU controller is adapted to survey different disturbance parameters, also called disturbance capabilities. Said capabilities may be any of e.g. time duration, voltage level, number of pulses, power level, etc. The PSU is adapted to decide and to actively switch power feeding from the power feeding circuitry PSU to an internal (battery) power feed or external (AC) power feed, and vice versa. The disturbance can be logged and recorded by the RBS controller computer program software.

The different conditions, threshold criteria, for switching between the different feed modes can be settable in the PSU controller and/or RBS controller from an operational support system (OSS) of the telecommunications network and system.

When the power feed circuitry PSU is disconnected from the external power feed, in internal feed mode, its MTBF is not affected by the disturbance on the external power feed (power grid) and thereby the lifetime of the units can be prolonged. The power feed circuitry in the PSU is power fed in internal power feed mode from the internal power feed and swiched to external feed mode by the RBS controller by means of commands, wherein the RBS controller disables the internal power feed and controls the switch or relay to connect the external power feed to the power feed circuitry.

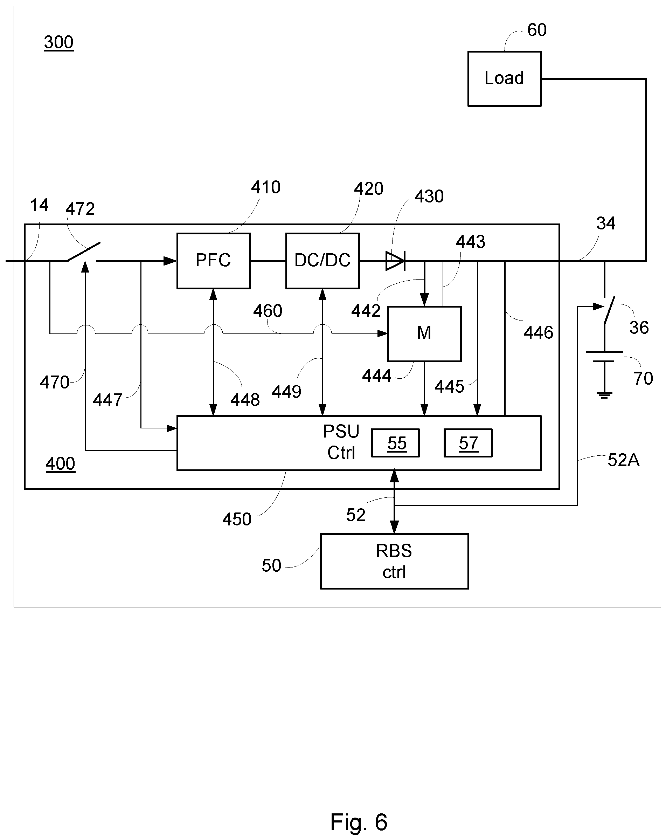

For implementing the surveillance of disturbances in the external power feed in power feed circuitry such as a PSU 40 (see figure 3), a disturbance measuring device is provided. Said disturbance measurement device, DMD, is connected at the input terminal of the PSU and the output of the PSU, preferably at the output of the diode bridge on the internal power feed side. The DMD is capable of detecting disturbances at the input and output of the PSU and detecting, registering and measure the level of disturbance capabilities, e.g. time between disturbances, duration of a disturbance, voltage level, number of disturbances within a time period or window, power, etc. The output of the DMD is forwarded via the PSU controller to the RBS controller, which is provided with computer program software for comparing the received disturbance capability to a disturbance threshold criterion for determining if the received disturbance is of a kind that may have influence on the MTBF. The kind of disturbance capabilities to be measured and compared to by the disturbance threshold criterion could be set by means of RBS controller and/or the OSS. Said computer program software for measuring and comparing may be stored or excecuted either in the PSU controller or the RBS controller, but the RBS controller is adapted to survey and control the PSU controller. In dependence of the result of the comparison, the RBS controller is adapted to select an operation mode, either external power feed mode, mode_A, or an internal power feed, mode_B by means of the disturbance threshold criterion. The RBS controller is therefore adapted to control the operation mode of the power feed circuitry PSU by means of switching the PSU off and the internal power feed on, and vice versa. In mode_A, the external power feed is connected to the PSU and the internal power feed is disconnected. In mode_B, the external power feed is disconnected and the internal power feed is connected. The disconnection and connection of the external power feed and the internal power feed, respectively, may be implemented by means of circuit breakers, such as switches or relays, at the input terminal and the output of the PSU. Said switches or relays are controlled by the PSU controller and/or RBS controller, both implementations and embodiments are possible. An implementation of power feed circuitry PSU 400 is illustrated in figure 6 of this description. Said power feed circuitry PSU 400 is implementing a method S100 for increasing reliability and resilience of power feed circuitry for providing electric power from an electric power feed to a radio base station RBS.

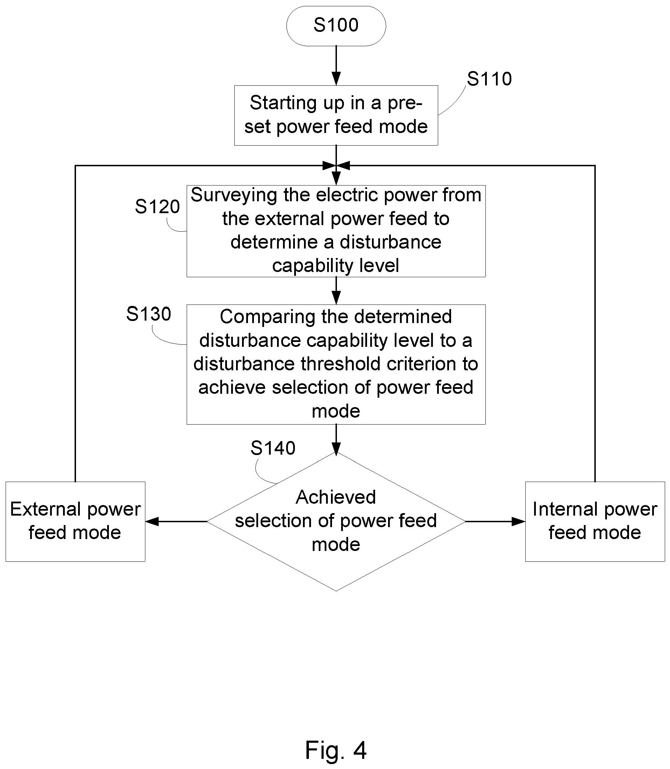

Figure 4 is a flowchart illustrating a method S100 for increasing reliability and resilience of power feed circuitry for providing electric power from an electronic power feed to a radio base station RBS. The RBS is adapted to be driven in either internal power feed mode by an internal power feed or an external power feed mode by said external power feed providing unstable electric power due to disturbances in the electric power. After a starting step, S110, of the RBS by starting up the RBS in a pre-set power feed mode, said method enables operating the radio base station in the external power feed mode, mode_A, or in the internal power feed mode, mode_B, by continuously performing the steps of:

| | |
|---|---|
| **S120:** | - Surveying the electric power from the external power feed to determine a disturbance capability level; |
| **S130:** | - Comparing the determined disturbance capability level to a disturbance threshold criterion to achieve selection of power feed mode; and |
| **S140:** | Achieved selection of power mode: - Selecting mode due to the achieved mode selection to the external power feed mode (mode_A) or the internal power feed mode (mode_B), wherein the power feed circuitry is disconnected from the external power feed. |

In one embodiment of the method, the surveying of the electric power from the external power feed to determine a disturbance capability level, S120, is performed by measuring a disturbance capability level of the electric power at the input of the power feed circuitry. A disturbance measurement device, DMD, may be used and it is connected at the input terminal of the PSU and the output of the PSU, preferably at the output of the diode bridge on the internal power feed side. The DMD (444 in figure 6) is a high speed device having enough bandwidth for detecting disturbances at the input and output of the PSU and detecting, registering and measure the level of disturbance capabilities, e.g. time between disturbances, duration of a disturbance, voltage level, number of disturbances within a time period or window, power, etc. The PSU controller is capable of measuring voltage levels with less speed and bandwidth than needed for measuring short disturbances like fast pulses or transients and burst comprising many fast pulses or transients.

In another embodiment of the method, the surveying of the electric power from the external power feed to determine a disturbance capability level, S120, is performed by receiving disturbance information comprising measured disturbance level status from other radio base station connected to the same external power feed. The level of disturbance capability of an external power feed may be measured by another RBS site powered via the same power grid. The RBS sites may be adapted to exchange disturbance information comprising the level of disturbance capability, and to perform step S130 and S140 based on said information.

In yet another embodiment, the surveying of the electric power from the external power feed to determine a disturbance level, S120, is performed by both measuring disturbance capability level of the electric power at the input of the power feed circuitry PSU and receiving disturbance information comprising measured disturbance level status from other radio base stations connected to the same external power feed.

The disturbance threshold criterion is based on a threshold level for a corresponding disturbance capability in the electric power from the external power feed.

The disturbance threshold level may be based on at least one corresponding disturbance capability, e.g. time duration, voltage level, number of pulses, power level, ramp up time, ramp down time, and/or how many times per time unit that a measured disturbance exceeds a pre-set voltage level of the electric power from the external power feed.

A disturbance threshold criterion is set to alert the RBS controller to select and operate the RBS in an internal power feed mode when the absolute value of the level of the measured disturbance capability level, e.g. voltage, is higher than the pre-set disturbance threshold. In other case, when the absolute value of the level of the measured disturbance capability level is lower or equal to the pre-set disturbance threshold, the RBS controller selects and operates the RBS in mode_A, external power feed mode. The RBS controller is adapted as described above to control the switches to connect or disconnect the external and internal power feeds, respectively, to select the correct power feed mode for the RBS.

Hence, if a high (or low) voltage pulse is detected and measured by the RBS controller at the external power input, the controller will select and switch the RBS to operate in mode_B, while measuring at the external power input the disturbance capability level. If said pulse was the first pulse in a pulse train of high, or low, pulses, only the first pulse will pass through the power feed circuitry PSU, while the following pulses is stoped by the switch at the external power input, thereby protecting the circuitry of the RBS for damages that will decrease the MTBF.

Different disturbance threshold criteria may be used by the RBS controller depending on which mode the the RBS is operating.

For example to prohibit a ping-pong state, wherein the RBS is switching between the power feed modes many times very rapidly, one disturbance threshold criterion may state to the RBS controller should stay in the mode_B for a time period and switch to mode_A at the end of said time period. Another disturbance threshold criterion may also be used stating that if less than a pre-set number of high (or low) pulses is detected and measured at the input of the PSU within a pre-set time period, the RBS controller may switch from mode_B and switch to mode_A at the end of said time period, but if the number of disturbance pulses is equal to or exceeding the allowed threshold number of disturbance pulses, the RBS controller should should select to stay in mode_B. Such a criterion is enabled by using or providing the RBS controller with a timer and pulse counter, if not already provided fore. Thus, when the pre-set time period has lapsed, the RBS controller is either selecting based on the disturbance threshold criterion to switch to mode_A or stay in mode_B for a new pre-set time period.

Thus, the power circuitry of a radio base station is disconnected from the external power feed during periods of damaging disturbance levels in the external power feed wherein the radio base station is powered by an internal power feed enabling measurement of the disturbance capability level at the input of the external power feed and return to the external power feed of the radio base station during periods of low disturbance levels, Said damaging level for a corresponding disturbance capability is often possible to test in lab environment. The disturbance threshold level is then set equal to or close to said damaging disturbance level for a corresponding disturbance capability for avoiding decrease of mean time between failure.

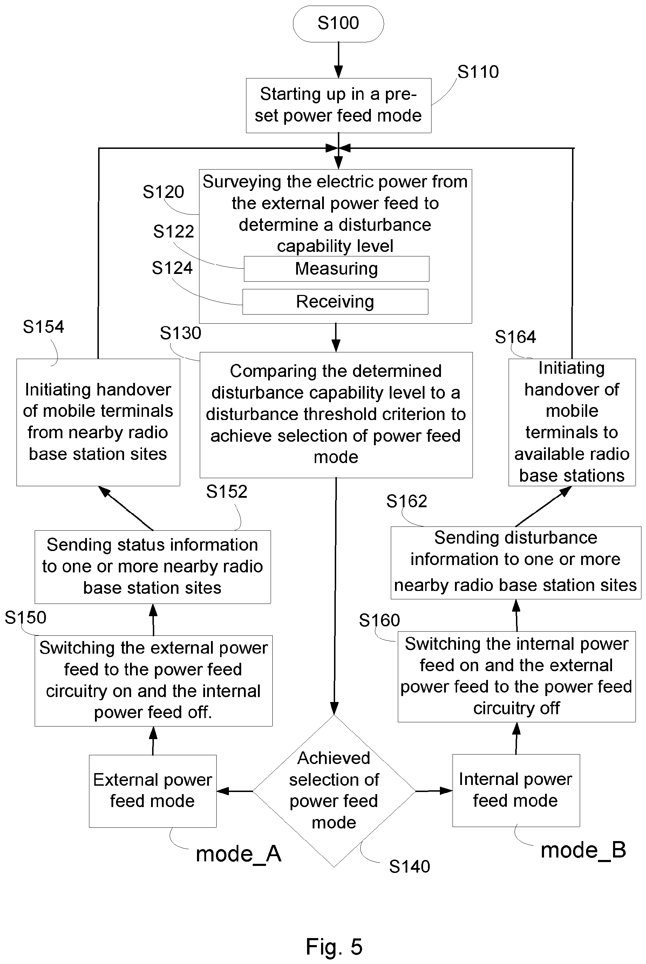

Figure 5 is illustrating an embodiment of the method.

The surveying step S120 of the electric power from the external power feed to determine a disturbance capability level comprises:
**S122:** Measuring: - Measuring disturbance capability level of the electric power at the input of the power feed circuitry.

The surveying step S120 may also comprise:
**S124:** Receiving: - Receiving disturbance information comprising measured disturbance capability level status from other radio base stations connected to the same external power feed.

Said steps S122 and S124 may be used alone or together to determine a disturbance capability level.

When selecting, in S140, mode due to the achieved mode selection to the external power feed mode or the internal power feed mode, said step is performed by switching to the external power feed mode, mode_A, and by: **S150:** - switching the external power feed to the power feed circuitry on and the internal power feed off.

The selecting step, S140, mode due to the achieved mode selection to the external power feed mode, mode_A, or the internal power feed mode, mode_B, implies when switching to the internal power feed mode, mode_B:
**S160:** - Switching the internal power feed on and the external power feed to the power feed circuitry off.

When operating the radio base station in the external power feed mode, mode_A, the method comprises:
**S152:** - Sending status information to one or more nearby radio base station sites.

Said status information may involve information that the RBS has switched from operating in the internal power feed mode, mode_B, and the RBS is now in the external power feed mode, mode_A, allowing more mobile terminals to be served by the RBS. The sending of status information to one or more nearby radio base station sites prepares said nearby sites to prepare for some of the MTs to be handed over by the RBS by:
**S154:** - Initiating handover of mobile terminals from nearby radio base station sites.

The embodiment of the method comprising steps S152 and S154 is preferably performed by the RBS in an RBS micro cell site returning to external power feed mode for performing the handover procedure of active MTs within its micro cell area and a covering macro cell of a nearby RBS macro cell site. RBS micro sites are often just for increasing the traffic capacity in an RBS macro cell site.

It should be noted that in the mode_A, steps S150, S152 and S154 may be performed only once in the method loop, also comprising steps S120, S130 and S140, as long as the RBS is in mode_A.

When an RBS is operated in the internal power feed mode, mode_B, said method involves a step of:
**S162:** - Sending disturbance information to one or more nearby radio base station sites.

Said step is enabled by the step of measuring disturbance capability level of the electric power at the input of the power feed circuitry.

The sending of disturbance information to one or more nearby radio base station sites prepares said nearby sites to take over all or some of the MTs served by the RBS, thereby off-loading the RBS by:
**S164:** - Initiating handover of mobile terminals to available radio base stations.

The embodiment of the method comprising steps S162 and S164 is preferably performed by the RBS in a RBS micro cell site before performing the handover procedure of its active MTs to a RBS macro cell more or less covering the area of the micro cell for securing service to the active MTs when the power feeding of the RBS of the micro cell structure is seriously disturbed. The RBS of the macro cell often has better capacity to serve many MTs than an RBS of a micro cell structure.

It should be noted that in the mode_B, steps S160, S162 and S164 may be performed only once in the method loop, also comprising steps S120, S130 and S140, as long as the RBS stays in mode_B.

As already stated, the internal power feed may be a battery arrangement, and the external power feed may be an AC grid arrangement.

The above described method and embodiments thereof may be implemented in digital electronically circuitry, or in computer hardware, firmware, software, or in combinations of them. Apparatus of said described method and embodiments thereof may be implemented in a computer program product tangibly embodied in a machine readable storage device for execution by a programmable processor; and the method steps may be performed by a programmable processor executing a program of instructions to perform functions of the invention by operating on input data and generating output.

The described method and embodiments thereof may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language.

Generally, a processor will receive instructions and data from a read-only memory and/or a random access memory. Storage devices suitable for tangibly embodying computer program instructions and data include all forms of non-volatile memory, including by way of example semiconductor memory devices, such as EPROM (erasable programmable read only memory), EEPROM (electrically erasable programmable read only memory), and flash memory devices; magnetic disks such internal hard disks and removable disks; magneto-optical disks; and CD-ROM (Compact Disc Read-Only Memory) disks. Any of the foregoing may be supplemented by, or incorporated in, specially designed ASICs (Application Specific Integrated Circuits).

Figure 6 is a block diagram illustrating a power feed circuitry of a power supply unit, PSU, for implementing said method and embodiments thereof.

The power supply unit, PSU, 400 is a power feed circuitry that comprises a number of electronic components for converting and adjusting the power feed to loads 60 needing electric power for its operation and functionality. Examples of said loads are transceivers, power amplifier circuits and antennas. The PSU is fed from an external power feed, e.g. an AC (Alternating Current) power grid, to which it is connected via the input terminal 14. On the output 34 of the PSU 400 is a converted and adjusted Direct Current (DC) provided, which power and voltage is adjusted and controlled.

The known PSU design (see 40 in figure 3) has a lot of similarities with the power feed circuitry 400, but it differs from the design of the herein described PSU 400 in a number of aspects, which differences will be described hereafter.

The input 14 is connected to a switch 472 for switching the power feed from the external power feed off or on. In the illustrated embodiment, the switch is provided onto the PSU 400 module card and integrated with the PSU. In another embodiment, said switch is a separate unit, and the output of the switch is connected to the AC input port of the PSU module card.

The switch is connected to a Power Factor Correction unit 410 for converting the provided AC into DC and correcting the power factor of the received AC. The result is a corrected DC current which is connected to a DC/DC converter 420 for adjusting the DC to the correct voltage level of the load that the PSU is designated to feed.

The switch 472 may be replaced by a relay or other circuit breaker being controlled by the RBS controller via the PSU controller for enabling connection and disconnection of the external power feed on command.

Between the output 34 of the PSU and the DC/DC converter 420 is a diode bridge 430 inserted for prohibiting current feed back to leak through the PSU, if the PSU is shut down or the external power feed does not provide any electric power to the PSU. If the PSU has been shut down or the external power feed does not provide any electric power to the PSU, an internal power feed 70 is adapted to be switched on for securing the operation and function of the RBS.

As already stated, the internal power feed 70 may be a battery arrangement, and the external power feed may be an AC grid arrangement (see 10 in figure 1).

The PSU 400 comprises a PSU controller 450 which is fed by the DC/DC converter and connected between the output of diode bridge 430 and the output 34 via a feeding connection 446.

The PSU controller 450 is adapted to control the DC on the output 34 by means of a feedback loop 445 connected to the output of the diode bridge 430 and a feed forward loop 447 connected to the input 14 of the PSU 400 between the switch 472 and the input of the PFC 410. Said feed forward loop 447 and a feedback loop 445 is connected to the PSU controller 450 and PSU controller is adapted by means of the loops to measure the input and output current/voltage. The PSU controller 450 comprises control software and/or hardware for measuring and processing said the AC voltage level on the input to the PFC 410 and the DC voltage level on the ouput 34 of the PSU. Said processing by the software/hardware results in control signals for controlling the PFC unit 410 and the DC/DC converter 420 for adjusting the output current/voltage on the PSU output 34. The PFC unit 410 and the DC/DC converter 420 are connected to the PSU controller 450 via control buss 448 and 449, respectively.

The PSU controller 450 is further connected via a control bus/signal 470 to the switch 472. The controller 450 is adapted to control the position of the switch, on or off, by means of the control signals on the control bus 470 thereby connecting or disconnecting the external power feed to the PSU 400.

The PSU 400 differs further from the known design of PSU (see figure 3) in that it comprises or is connected to a high speed sampling disturbance measurement device 444, which is power fed via a connection 443 to the output 34 of the diode bridge 430. Said measurement unit 444 measures both via connections 460 and 442 the disturbance capability level at the input 14 to the switch 470 and at the output 34 of the diode bridge and the PSU. As the disturbance measurement device, DMD is connected to the input of the switch via a connection wiring 460, the measurement unit is capable of providing the PSU controller with input voltage and disturbance capability level of the external power feed both when the switch is set in position on, i.e. in mode_A, and in position off, i.e. in mode_B. Thus, the PSU controller 450 is capable of continuously survey the disturbance capabilities in power feed of the external power feed both in mode_A and mode_B.

The DMD 444 is capable of detecting disturbances at the input and output of the PSU and detecting, registering and measure the level of one or more disturbance capability, e.g. time between disturbances, duration of a disturbance, voltage level, number of disturbances within a time period or window, power, etc. The output of the DMD is forwarded to the PSU controller, which is provided with computer program software for comparing the received disturbance capabilities to a disturbance threshold criterion for determining if the received disturbance is of a kind that may have influence on the MTBF.

The kind of disturbance capabilities to be measured and the threshold criterion could be set by means of RBS controller and/or the OSS. Said computer program software may be stored either in the PSU controller or the RBS controller. In dependence of the result of the comparison, the PSU controller or the RBS controller is adapted to select an operation mode, either external power feed mode, mode_A, or an internal power feed, mode_B. The PSU controller or the RBS controller is therefore adapted to control the operation mode of the power feed circuitry PSU by means of switching the PSU off and the internal power feed on, and vice versa.

The illustrated design further differs from earlier known PSU design in that the PSU controller is receiving measurement results when the PSU and RBS is operated in mode_B, i.e. power supplied by the internal power feed. This is possible, the PSU controller 450 is fed from the internal power feed 70, receives feedback via the feedback loop 445 and measured voltage levels from the output of the diode bridge 430, which is the same side of the power bridge as the internal power feed 70.

The PSU controller 450 may be connected via a data bus 52 to a main controller 50 of the RBS. Said data bus 52 enables communication with the PSU and control of the switch 36 for connecting and disconnecting the internal power feed 70 via connection 52A. The RBS controller 50 is a digital processor arrangement for controlling the function and operation of the PSU controller 450.

As an RBS may comprise a plurality of PSUs (see embodiment in figure 2), the main controller 50 is provided with software to supervise/logging and control the operation and function of all said PSUs 400 of the RBS.

The RBS controller 50 differs from known RBS controllers of known in that the RBS controller 50 is adapted to perform the above described method S100 and embodiments thereof by means of executing computer program software comprising computer program instructions implementing the steps of said method S100 and embodiments thereof.

It is therefore provided a radio base station of a wireless communications network, wherein the RBS comprises one or more PSUs comprising power feed circuitry 400 for providing electric power from an external power feed to the radio base station. The RBS is adapted to be driven in either internal power feed mode by an internal power feed or in an external power feed mode by said external power feed providing unstable electric power due to disturbances in the electric power. Said RBS controller comprises processor circuitry being adapted to operate the power feed circuitry 400 in the external power feed mode, mode_A, or in the internal power feed mode, mode_B, by continuously:
- Surveying the electric power from the external power feed to determine a disturbance capability level;
- Comparing the determined disturbance capability level to a disturbance threshold criterion to achieve selection of power feed mode; and
- Selecting mode due to the achieved mode selection to the external power feed mode (mode_A) or the internal power feed mode (mode_B), wherein the power feed circuitry is disconnected from the external power feed.

The RBS controller 50 is adapted to start up the PSU in a pre-set power feed mode, either mode_A or mode_B. However, it is most probable that mode_A, external power feed, is a preferred start up mode.

The RBS controller is further adapted to selecting either mode and controlling a switch 472 for connecting and disconnecting the external power feed at the external power input 14 of the power feed circuitry and a switch 36 for connecting and disconnecting the internal power feed at the output 34 of the power feed circuitry.

The RBS controller 50 is adapted to select mode due to the achieved mode selection to the external power feed mode, mode_A, or the internal power feed mode, mode_B.

If switching to the external power feed mode, the processor circuitry 50 is switching the external power feed on by disconnecting the switch 472 for connecting and disconnecting the external power feed at the external power input 14 and the internal power feed to the power feed circuitry off by connecting the switch 36 for connecting and disconnecting the internal power feed at the output 34 of the power feed circuitry.

When switching from mode_A to mode_B, the processor 50 switches the internal power feed off by disconnecting the switch 36 for connecting the internal power feed at the output 34 of the power feed circuitry and the external power feed to the power feed circuitry on by connecting the switch 472 for connecting and disconnecting the external power feed at the external power input 14.

The RBS controller 50 is adapted to survey the electric power from the external power feed to determine a disturbance capability level by measuring the disturbance capability level of the electric power at the input terminal 14 of the power feed circuitry by means of the PSU controller 450 and the DMD 444.

According to one embodiment, the RBS processor is further adapted to survey the electric power from the external power feed to determine a disturbance capability level by receiving disturbance information comprising measured disturbance level status from other radio base station connected to the same external power feed. Said disturbance information may be communicated over an interface (22 in figure 1) between the RBSs of different RBS sites.

The threshold criterion is based on a threshold level for a corresponding disturbance capability in the electric power from the external power feed. The threshold level is based on at least one corresponding disturbance capability, e.g time duration, voltage level, number of pulses, power level, and/or how many times per time unit that a measured disturbance exceeds a pre-set voltage level of the electric power from the external power feed.

According to yet one embodiment, the RBS controller 50 may also be adapted to operate the radio base station in the internal power feed mode, mode_B, wherein it is adapted to send disturbance information to one or more nearby radio base station sites.

The RBS controller 50 may further be adapted to operate the radio base station in the internal power feed mode, mode_ B, wherein it initiates to perform handover procedure of mobile terminals to available radio base stations. The handover procedure as such is already known by standardization documents.

The RBS controller 50 may further be adapted to operate of the radio base station in the external power feed mode, mode_A, and to send status information to one or more nearby radio base station sites.

The RBS controller 50 is further adapted to operate the radio base station in the external power feed mode, mode_A, and initiate to perform handover of mobile terminals from nearby radio base station sites.

In the following example, the operation of RBS is described.

The RBS 300 is pre-set to start in the external power feed mode, mode_A. The switch 472 is position on, i.e. the external power feed is connected to the circuitry of the PSU 400. The PSU controller 450 and the disturbance measuring device 444 are measuring any of operation voltage/current/power levels and disturbance capability levels, e.g. voltage level of disturbance, respectively, under surveillance of the RBS controller.

During said surveillance of the RBS controller, the PSU controller is configured to send the measured levels to the RBS controller, which determines a disturbance capability level by measuring the disturbance capability level of the electric power at the input terminal 14 of the power feed circuitry by means of the PSU controller 450 and the DMD 444. The RBS controller is provided with computer program software that compares the determined disturbance capability level to a disturbance threshold criterion to achieve selection of power feed mode; and selects (S140) mode due to the achieved mode selection to the external power feed mode (mode_A) or the internal power feed mode (mode_B), wherein the power feed circuitry is disconnected from the external power feed.

The disturbance threshold criterion is set to alert the RBS controller to select and operate the RBS in an internal power feed mode when the absolute value of the level of the measured disturbance capability level, e.g. voltage, is higher than the pre-set disturbance threshold. In other case, when the absolute value of the level of the measured disturbance capability level is lower or equal to the pre-set disturbance threshold, the RBS controller selects and operates the RBS in mode_A, external power feed mode. The RBS controller is adapted as described above to control the switches 472 and 36 to connect or disconnect the external and internal power feeds, respectively, to select the correct power feed mode for the RBS.

Hence, if a high (or low) voltage pulse is detected and measured by the RBS controller at the external power input (14), the controller 50 will select and switch the RBS to operate in mode_B, while measuring at the external power input (14) the disturbance capability level. If said pulse was the first pulse in a pulse train of high, or low, pulses, only the first pulse will pass through the power feed circuitry PSU, while the following pulses is stoped by the switch 472 at the external power input, thereby protecting the circuitry of the RBS for damages that will decrease the MTBF.

A different disturbance threshold criterion may be used when the RBS is operating in mode_B for prohibiting a ping-pong state, wherein the RBS is switching power feed mode many times very rapidly. Said disturbance threshold criterion may state to the RBS controller to stay in the mode_B for a time period and switch to mode_A at the end of said time period. Another disturbance threshold criterion may also be used stating that if less than a pre-set number of high (or low) pulses is detected and measured at the input (14) of the PSU within a pre-set time period, the RBS controller may switch from mode_B and switch to mode_A at the end of said time period, but if the number of disturbance pulses is equal to or exceeding the allowed threshold number of disturbance pulses, the RBS controller should should select to stay in mode_B. Such a criterion is enabled by using or providing the RBS controller with a timer and pulse counter, if not already provided fore. Thus, when the pre-set time period has lapsed, the RBS controller is either selecting based on the disturbance threshold criterion to switch to mode_A or stay in mode_B for a new pre-set time period.

One advantage with the above described solution is that the PSU does not turn off by itself as was a problem with prior art PSU when no voltage or undervoltage is applied/appears at the input stage. Every turn on and off of the PSU affects the product/components MTBF and lifetime.

It is also provided a computer program comprising computer program code which, when run in a processor circuitry 55 of radio base station controller 50 of a radio base station, causes the radio base station controller to perform the steps of the method S100.

It is also provided a computer program product comprising a computer program and a computer readable means 57 on which the computer program is stored.

It is further provided a carrier containing the computer program, wherein the carrier is one of an electronic signal, optical signal, radio signal or computer readable storage medium 57.

A number of embodiments of the present technique have been described. It will be understood that various modifications may be made without departing from the scope of the technique. Therefore, other implementations are within the scope of the following claims.

## Claims

1. Method (S100) for increasing reliability and resilience of power feed circuitry (400) for providing electric power from an external power feed (10) to a radio base station (300), which is adapted to be driven in either an internal power feed mode (mode_B) by an internal power feed or an external power feed mode (mode_A) by said external power feed (10) providing unstable electric power due to disturbances in the electric power, said method comprising:
- Operating the radio base station (300) in the external power feed mode (mode_A) or in the internal power feed mode (mode_B) by continuously:
- Surveying (S120) the electric power from the external power feed (10) to determine a disturbance capability level;
- Comparing (S130) the determined disturbance capability level to a plurality of disturbance threshold criteria; and
- Selecting (S140), based on the comparing (S130), the external power feed mode (mode_A) or the internal power feed mode (mode_B), wherein the power feed circuitry (400) is disconnected from the external power feed (10),
wherein the plurality of disturbance threshold criteria include: detection of an increase in the voltage from the external power feed (10) above a first predetermined threshold; and detection of a decrease in the voltage from the external power feed (10) below a second predetermined threshold.

2. A radio base station (300) of a wireless telecommunications network, wherein the radio base station (300) comprises power feed circuitry (400) for providing electric power from an external power feed (10) to the radio base station (300), which is adapted to be driven in either internal power feed mode (mode_B) by an internal power feed or an external power feed mode (mode_A) by said external power feed (10) providing unstable electric power due to disturbances in the electric power, said radio base station (300) comprises a controller (50) comprising a processor circuitry being adapted to operate the radio base station (300) in the external power feed mode (mode_A) or in the internal power feed mode (mode_B) by continuously:
- Surveying (S120) the electric power from the external power feed (10) to determine a disturbance capability level;
- Comparing (S130) the determined disturbance capability level to a plurality of disturbance threshold criteria; and
- Selecting (S140), based on the comparing (S130), the external power feed mode (mode_A) or the internal power feed mode (mode_B), wherein the power feed circuitry (400) is disconnected from the external power feed (10),
wherein the plurality of disturbance threshold criteria include: detection of an increase in the voltage from the external power feed (10) above a first predetermined threshold; and detection of a decrease in the voltage from the external power feed (10) below a second predetermined threshold.

3. The radio base station (300) according to claim 2, wherein the controller (50) is adapted to survey the electric power from the external power feed (10) to determine the disturbance capability level by measuring disturbance capability level of the electric power at the input of the power feed circuitry (400) by means of a disturbance measurement device (444) and a controller (450) of the power feed circuitry (400).

4. The radio base station (300) according to any of claims 2 and 3, wherein the controller (50) is further adapted to survey the electric power from the external power feed (10) to determine the disturbance capability level by receiving disturbance information comprising measured disturbance capability level status from other radio base stations connected to the same external power feed (10) and logging said disturbance information.

5. The radio base station (300) according to any of claims 2 to 4, wherein the threshold capability level is based on at least one corresponding disturbance capability.

6. The radio base station (300) according to any of claims 2 to 5, wherein the controller (50) is adapted to operate the radio base station (300) in the internal power feed mode (mode_B) by sending disturbance information to one or more nearby radio base station sites and logging said disturbance information.

7. The radio base station (300) according any of claims 2 to 6, wherein the controller (50) is adapted to operate the radio base station (300) in the internal power feed mode (mode_ B), and initiate handover of mobile terminals (25) to available radio base stations.

8. The radio base station (300) according to any of claims 2 to5, wherein the controller (50) is adapted to operate the radio base station (300) in the external power feed mode (mode_A) by sending status information to one or more nearby radio base station sites.

9. The radio base station (300) according to any of claims 2 to 5 and 8, wherein the controller (50) is further adapted to operate the radio base station (300) in the external power feed mode (mode_A) by initiating handover of mobile terminals (25) from nearby radio base station sites.

10. The radio base station (300) according to any of claims 2 to 9, wherein the controller (50) is adapted to select the external power feed mode (mode_A) or the internal power feed mode (mode_B) by controlling a switch (472) for connecting and disconnecting the external power feed (10) at the external power input (14) of the power feed circuitry (400) and a switch (36) for connecting and disconnecting the internal power feed at the output (34) of the power feed circuitry (400), wherein the selection of the internal power feed mode (mode B) comprises switching the internal power feed on and the external power feed (10) to the power feed circuitry (400) off.

11. The radio base station (300) according to any of claims 2 to 9, wherein the controller (50) is adapted to select the external power feed mode (mode_A) or the internal power feed mode (mode_B) by controlling a switch (472) for connecting and disconnecting the external power feed (10) at the external power input (14) of the power feed circuitry and a switch (36) for connecting and disconnecting the internal power feed at the output (34) of the power feed circuitry (400), wherein the selection of the external power feed mode (mode_A) comprises switching the external power feed (10) to the power feed circuitry (400) on and the internal power feed off.

12. The radio base station (300) according to claim 11, wherein the power feed circuitry (400) is configured, in the internal power feed mode (mode_B), to enable power measurement to determine a disturbance capability level by measuring the disturbance capability level of the electric power at the input of the power feed circuitry (400) by means of a disturbance measurement device (444) and a controller (450) of the power feed circuitry (400).

13. The radio base station (300) according to any of claims 2 to 12, wherein the controller (50) is adapted to start up in a pre-set power feed mode.

14. The radio base station (300) according to any of claims 2 to 13, wherein the internal power feed is a battery arrangement, and/or wherein the external power feed (10) is an AC grid arrangement.

15. A computer program comprising computer program code which, when run in a processor circuitry (55) of a radio base station controller (50) of a radio base station (300), causes the radio base station controller (50) to perform the steps of the method (S100) according to claim 1.

## Patentansprüche

1. Verfahren (S100) zur Erhöhung der Zuverlässigkeit und Ausfallsicherheit einer Leistungsversorgungsschaltungsanordnung (400) zum Bereitstellen von elektrischer Leistung von einer externen Leistungsversorgung (10) für eine Funkbasisstation (300), die so ausgelegt ist, dass sie entweder in einem internen Leistungsversorgungsmodus (Modus_B) durch eine interne Leistungsversorgung oder einem externen Leistungsversorgungsmodus (Modus_A) durch die externe Leistungsversorgung (10) betrieben wird, die aufgrund von Störungen in der elektrischen Leistung instabile elektrische Leistung bereitstellt, wobei das Verfahren umfasst:
- Betreiben der Funkbasisstation (300) im externen Leistungsversorgungsmodus (Modus_A) oder im internen Leistungsversorgungsmodus (Modus_B) durch kontinuierliches:
- Überprüfen (S120) der elektrischen Leistung von der externen Leistungsversorgung (10), um einen Störfähigkeitspegel zu bestimmen;
- Vergleichen (S130) des bestimmten Störfähigkeitspegels mit einer Mehrzahl von Störungsschwellenkriterien; und
- Auswählen (S140) basierend auf dem Vergleichen (S130) des externen Leistungsversorgungsmodus (Modus_A) oder des internen Leistungsversorgungsmodus (Modus_B), wobei die Leistungsversorgungsschaltungsanordnung (400) von der externen Leistungsversorgung (10) getrennt wird,
wobei die Mehrzahl von Störungsschwellenkriterien umfasst: Detektion einer Zunahme der Spannung von der externen Leistungsversorgung (10) über eine erste vorbestimmte Schwelle; und Detektion einer Abnahme der Spannung von der externen Leistungsversorgung (10) unter eine zweite vorbestimmte Schwelle.

2. Funkbasisstation (300) eines drahtlosen Telekommunikationsnetzwerks, wobei die Funkbasisstation (300) eine Leistungsversorgungsschaltungsanordnung (400) zum Bereitstellen von elektrischer Leistung von einer externen Leistungsversorgung (10) für die Funkbasisstation (300) umfasst, die so ausgelegt ist, dass sie entweder in einem internen Leistungsversorgungsmodus (Modus_B) durch eine interne Leistungsversorgung oder einem externen Leistungsversorgungsmodus (Modus_A) durch die externe Leistungsversorgung (10) betrieben wird, die aufgrund von Störungen in der elektrischen Leistung instabile elektrische Leistung bereitstellt, wobei die Funkbasisstation (300) eine Steuerung (50) umfasst, die eine Prozessorschaltungsanordnung umfasst, die zum Betreiben der Funkbasisstation (300) im externen Leistungsversorgungsmodus (Modus_A) oder im internen Leistungsversorgungsmodus (Modus_B) ausgelegt ist durch kontinuierliches:
- Überwachen (S120) der elektrischen Leistung von der externen Leistungsversorgung (10), um einen Störfähigkeitspegel zu bestimmen;
- Vergleichen (S130) des bestimmten Störfähigkeitspegels mit einer Mehrzahl von Störungsschwellenkriterien; und
- Auswählen (S140) basierend auf dem Vergleichen (S130) des externen Leistungsversorgungsmodus (Modus_A) oder des internen Leistungsversorgungsmodus (Modus_B), wobei die Leistungsversorgungsschaltungsanordnung (400) von der externen Leistungsversorgung (10) getrennt wird,
wobei die Mehrzahl von Störungsschwellenkriterien umfasst: Detektion einer Zunahme der Spannung von der externen Leistungsversorgung (10) über eine erste vorbestimmte Schwelle; und Detektion einer Abnahme der Spannung von der externen Leistungsversorgung (10) unter eine zweite vorbestimmte Schwelle.

3. Funkbasisstation (300) nach Anspruch 2, wobei die Steuerung (50) so ausgelegt ist, dass sie die elektrische Leistung von der externen Leistungsversorgung (10) überprüft, um den Störfähigkeitspegel durch Messen eines Störfähigkeitspegels der elektrischen Leistung am Eingang der Leistungsversorgungsschaltungsanordnung (400) mittels einer Störungsmessungsvorrichtung (444) und einer Steuerung (450) der Leistungsversorgungsschaltungsanordnung (400) zu bestimmen.

4. Funkbasisstation (300) nach einem der Ansprüche 2 und 3, wobei die Steuerung (50) ferner so ausgelegt ist, dass sie die elektrische Leistung von der externen Leistungsversorgung (10) überprüft, um den Störfähigkeitspegel durch Empfangen von Störungsinformationen, die einen gemessenen Störfähigkeitspegelstatus von anderen Funkbasisstationen umfassen, die mit der gleichen externen Leistungsversorgung (10) verbunden sind, und Protokollieren der Störungsinformationen zu bestimmen.

5. Funkbasisstation (300) nach einem der Ansprüche 2 bis 4, wobei der Schwellenfähigkeitspegel auf mindestens einer entsprechenden Störfähigkeit basiert.

6. Funkbasisstation (300) nach einem der Ansprüche 2 bis 5, wobei die Steuerung (50) zum Betreiben der Funkbasisstation (300) im internen Leistungsversorgungsmodus (Modus_B) durch Senden von Störungsinformationen an eine oder mehrere benachbarte Funkbasisstationsstellen und Protokollieren der Störungsinformationen ausgelegt ist.

7. Funkbasisstation (300) nach einem der Ansprüche 2 bis 6, wobei die Steuerung (50) zum Betreiben der Funkbasisstation (300) im internen Leistungsversorgungsmodus (Modus_B) und Einleiten von Handover von mobilen Endgeräten (25) an verfügbare Funkbasisstationsstellen ausgelegt ist.

8. Funkbasisstation (300) nach einem der Ansprüche 2 bis 5, wobei die Steuerung (50) zum Betreiben der Funkbasisstation (300) im externen Leistungsversorgungsmodus (Modus_A) durch Senden von Statusinformationen an eine oder mehrere benachbarte Funkbasisstationsstellen ausgelegt ist.

9. Funkbasisstation (300) nach einem der Ansprüche 2 bis 5 und 8, wobei die Steuerung (50) zum Betreiben der Funkbasisstation (300) im externen Leistungsversorgungsmodus (Modus_A) durch Einleiten von Handover von mobilen Endgeräten (25) von benachbarten Funkbasisstationsstellen ausgelegt ist.

10. Funkbasisstation (300) nach einem der Ansprüche 2 bis 9, wobei die Steuerung (50) so ausgelegt ist, dass sie den externen Leistungsversorgungsmodus (Modus_A) oder den internen Leistungsversorgungsmodus (Modus_B) durch Steuern eines Schalters (472) zum Verbinden und Trennen der externen Leistungsversorgung (10) am externen Leistungseingang (14) der Leistungsversorgungsschaltungsanordnung (400) und eines Schalters (36) zum Verbinden und Trennen der internen Leistungsversorgung am Ausgang (34) der Leistungsversorgungsschaltungsanordnung (400) auswählt, wobei die Auswahl des internen Leistungsversorgungsmodus (Modus_B) ein Einschalten der internen Leistungsversorgung (10) und Ausschalten der externen Leistungsversorgung (10) für die Leistungsversorgungsschaltungsanordnung (400) umfasst.

11. Funkbasisstation (300) nach einem der Ansprüche 2 bis 9, wobei die Steuerung (50) so ausgelegt ist, dass sie den externen Leistungsversorgungsmodus (Modus_A) oder den internen Leistungsversorgungsmodus (Modus_B) durch Steuern eines Schalters (472) zum Verbinden und Trennen der externen Leistungsversorgung (10) am externen Leistungseingang (14) der Leistungsversorgungsschaltungsanordnung (400) und eines Schalters (36) zum Verbinden und Trennen der internen Leistungsversorgung am Ausgang (34) der Leistungsversorgungsschaltungsanordnung (400) auswählt, wobei die Auswahl des externen Leistungsversorgungsmodus (Modus_A) ein Einschalten der externen Leistungsversorgung (10) für die Leistungsversorgungsschaltungsanordnung (400) und Ausschalten der internen Leistungsversorgung umfasst.

12. Funkbasisstation (300) nach Anspruch 11, wobei die Leistungsversorgungsschaltungsanordnung (400) so konfiguriert ist, dass sie im internen Leistungsversorgungsmodus (Modus_B) Leistungsmessung zum Bestimmen eines Störfähigkeitspegels durch Messen des Störfähigkeitspegels der elektrischen Leistung am Eingang der Leistungsversorgungsschaltungsanordnung (400) mittels einer Störungsmessungsvorrichtung (444) und einer Steuerung (450) der Leistungsversorgungsschaltungsanordnung (400) ermöglicht.

13. Funkbasisstation (300) nach einem der Ansprüche 2 bis 12, wobei die Steuerung (50) zum Starten in einem voreingestellten Leistungsversorgungsmodus ausgelegt ist.

14. Funkbasisstation (300) nach einem der Ansprüche 2 bis 13, wobei die interne Leistungsversorgung eine Batterieanordnung ist, und/oder wobei die externe Leistungsversorgung (10) eine WS-Netzanordnung ist.

15. Computerprogramm, umfassend Computerprogrammcode, der bei Ausführung in einer Prozessorschaltungsanordnung (55) einer Funkbasisstationssteuerung (50) einer Funkbasisstation (300) die Funkbasisstationssteuerung (50) zum Ausführen der Schritte des Verfahrens (S100) nach Anspruch 1 veranlasst.

## Revendications

1. Procédé (S100) pour augmenter la fiabilité et la résilience de circuits d'alimentation électrique (400) pour fournir une alimentation électrique à partir d'une alimentation électrique externe (10) à une station de base radio (300), qui est adaptée pour être entraîné soit en mode d'alimentation électrique interne (mode_B) par une alimentation électrique interne soit en mode d'alimentation électrique externe (mode_A) par ladite alimentation électrique externe (10) fournissant une alimentation électrique instable due aux perturbations dans l'alimentation électrique, ledit procédé comprenant de :
- faire fonctionner la station de base (300) dans le mode d'alimentation électrique externe (mode_A) ou dans le mode d'alimentation électrique interne (mode_B) en continuellement :
- étudiant (S120) l'alimentation électrique provenant de l'alimentation électrique (10) afin de déterminer un niveau de capacité de perturbation ;
- comparant (S130) le niveau de la capacité de perturbation déterminée avec une pluralité de critères de seuil de perturbation ; et
- sélectionnant (S140), sur la base de la comparaison (S130), le mode d'alimentation électrique externe (mode_A) ou le mode d'alimentation électrique interne (mode_B), dans laquelle le circuit d'alimentation électrique (400) est déconnecté de l'alimentation électrique externe(10),
dans laquelle la pluralité de critères de seuil de perturbation inclut : une détection d'une augmentation de la tension provenant de l'alimentation électrique externe (10) au-dessus d'un premier seuil déterminé ; et une détection d'une diminution de la tension provenant de l'alimentation électrique externe (10) au-dessous d'un second seuil prédéterminé.

2. Station de base radio (300) d'un réseau de télécommunications sans fil, dans laquelle la station de base radio (300) comprend des circuits d'alimentation électrique (400) pour fournir une alimentation électrique à partir d'une alimentation électrique externe (10) à la station de base radio (300), qui est adaptée pour être entraîné soit en mode d'alimentation électrique interne(mode_B) par une alimentation électrique interne soit en mode d'alimentation électrique externe (mode_A) par ladite alimentation électrique externe (10) fournissant une alimentation électrique instable due aux perturbations dans la puissance électrique, ladite station de base (300) comprend un contrôleur (50) comprenant un circuit de traitement étant adapté pour faire fonctionner la station de base radio (300) dans le mode d'alimentation électrique externe (mode_A) ou dans le mode d'alimentation électrique interne (mode_B) en continuellement :
- étudiant (S120) l'alimentation électrique provenant de l'alimentation électrique (10) afin de déterminer un niveau de capacité de perturbation ;
- comparant (S130) le niveau de la capacité de perturbation déterminée avec une pluralité de critères de seuil de perturbation ; et
- sélectionnant (S140), sur la base de la comparaison (S130), le mode d'alimentation électrique externe (mode_A) ou le mode d'alimentation électrique interne (mode_B), dans laquelle le circuit d'alimentation électrique (400) est déconnecté de l'alimentation électrique externe(10),
dans laquelle la pluralité de critères de seuil de perturbation inclut : la détection d'une augmentation de la tension au moment de l'alimentation électrique externe (10) au-dessus d'un premier seuil prédéterminé ; et la détection d'une diminution de la tension provenant de l'alimentation électrique externe (10) au-dessous d'un second seuil prédéterminé.

3. Station de base radio (300) selon la revendication 2, dans laquelle le contrôleur (50) est adapté pour étudier l'alimentation électrique provenant de l'alimentation électrique (10) afin de déterminer le niveau de capacité de perturbation mesurant un niveau de capacité de perturbation de l'alimentation électrique à l'entrée du circuit d'alimentation électrique (400) au niveau d'un dispositif de mesure de perturbation (444) et d'un contrôleur (450) du circuit d'alimentation électrique (400).

4. Station de base radio (300) selon une quelconque des revendications 2 et 3, dans laquelle le contrôleur (50) est en outre adapté pour étudier l'alimentation électrique provenant de l'alimentation électrique externe (10) afin de déterminer le niveau de capacité de perturbation en recevant une information de perturbation comprenant un statut de niveau de capacité de perturbation mesuré provenant d'autres stations de base radio connectées à la même alimentation électrique externe (10) et en journalisant ladite information de perturbation.

5. Station de base radio (300) selon une quelconque des revendications 2 à 4, dans laquelle le niveau de capacité de seuil est basé sur au moins une capacité de perturbation correspondante.

6. Station de base radio (300) selon une quelconque des revendications 2 à 5, dans laquelle le contrôleur (50) est adapté pour faire fonctionner la station de base radio (300) dans le mode d'alimentation électrique interne (mode_B) en envoyant une information de perturbation à un ou plusieurs sites de station de base radio voisins et en journalisant ladite information de perturbation.

7. Station de base radio (300) selon une quelconque des revendications 2 à 6, dans laquelle le contrôleur (50) est adapté pour faire fonctionner la station de base radio (300) dans le mode d'alimentation électrique (mode_B), et amorcer un transfert intercellulaire des terminaux mobiles (25) vers les stations de base radio disponibles.

8. Station de base radio (300) selon une quelconque des revendications 2 à 5, dans laquelle le contrôleur (50) est adapté pour faire fonctionner la station de base radio (300) dans le mode d'alimentation électrique externe (mode_A) en envoyant une information de statut à un ou plusieurs sites de station de base radio voisins.

9. Station de base radio (300) selon une quelconque des revendications 2 à 5 et 8, dans laquelle le contrôleur (50) est en outre adapté pour faire fonctionner la station de base radio (300) dans le mode d'alimentation électrique externe (mode_A) en amorçant un transfert intercellulaire des terminaux mobiles (25) à partir des sites de station de base radio voisins.

10. Station de base radio (300) selon une quelconque des revendications 2 à 9, dans laquelle le contrôleur (50) est adapté pour sélectionner le mode d'alimentation électrique externe (mode_A) ou le mode d'alimentation électrique interne (mode_B) en commandant un commutateur (472) pour connecter et déconnecter l'alimentation électrique externe (10) au niveau de l'entrée d'alimentation externe (14) du circuit d'alimentation électrique et un commutateur (36) pour connecter et déconnecter l'alimentation électrique interne au niveau de la sortie (34) du circuit d'alimentation électrique (400), dans laquelle la sélection du mode d'alimentation électrique interne (mode B) comprend de mettre en service l'alimentation électrique interne et de couper l'alimentation électrique externe (10) vers le circuit d'alimentation électrique (400) .

11. Station de base radio (300) selon une quelconque des revendications 2 à 9, , dans laquelle le contrôleur (50) est adapté pour sélectionner le mode d'alimentation électrique externe (mode_A) ou le mode d'alimentation électrique interne (mode_B) en commandant un commutateur (472) pour connecter et déconnecter l'alimentation électrique externe (10) au niveau de l'entrée d'alimentation électrique (14) du circuit d'alimentation électrique et un commutateur (36) pour connecter et déconnecter l'alimentation électrique interne au niveau de la sortie (34) du circuit d'alimentation électrique (400), dans lequel la sélection des modes d'alimentation électrique externe (mode_A) comprend de mettre en service l'alimentation électrique externe vers le circuit d'alimentation électrique (400) et de couper l'alimentation électrique interne.

12. Station de base radio (300) selon la revendication 11, dans laquelle le circuit d'alimentation électrique (400) est configuré, dans le mode d'alimentation électrique interne (mode_B), pour permettre des mesures de puissance afin de déterminer un niveau de capacité de perturbation de l'alimentation électrique au niveau de l'entrée du circuit d'alimentation électrique (400) au moyen d'un dispositif de mesure de perturbation (444) et d'un contrôleur (450) du circuit d'alimentation électrique (400).

13. Station de base radio (300) selon une quelconque des revendications 2 à 12, dans laquelle le contrôleur (50) est adapté pour démarrer dans un mode d'alimentation électrique préréglé.

14. Station de base radio (300) selon une quelconque des revendications 2 à 13, dans laquelle l'alimentation électrique interne est un type de batterie et/ou dans lequel l'alimentation électrique externe (10) est un dispositif de réseau CA.

15. Programme informatique comprenant un code de programme informatique qui, lorsqu'il est exécuté dans un circuit de processeur (55) d'un contrôleur de station de base radio (50) d'une station de base radio (300), amène le contrôleur de station de base radio (50) à mettre en oeuvre les étapes du procédé (S100) selon la revendication 1.
